# EUROPEAN PATENT APPLICATION

(11) **EP 4 804 108 A1**
(43) Date of publication of application: **09.09.2026**
(21) Application number: 25161634.8
(22) Date of filing: 04.03.2025
(51) Int. Cl.: G06Q 40/02, G06Q 20/40

(54) **METHOD AND SYSTEM FOR PAYMENT NETWORK THREAT DETECTION**

(71) Applicant: Mastercard International, Inc., Purchase, NY 10577 (US)
(72) Inventor: Liberto, Doriano Rory, London (GB); White, Alexander Nicholas, London (GB); Davies, Bailey Jack, London (GB); Vitzthum, Wolfgang, London (GB)
(74) Representative: Barker Brettell LLP

(57) **Abstract**

The present invention relates to a computer implemented method to detect threats in a payment network using a threat detection algorithm by limiting the growth of a data tree, for use with a threat detection algorithm. The method comprises, receiving (1003) transaction data relating to a first transaction, and retrieving (1001) a data tree comprising a first node connected to a second node representing a second transaction, where the source account of the first transaction is the same as the destination account of the second transaction. The method further comprises determining (1005) a difference in time between the time of the second transaction and the time of the first transaction and determining (1007) a total number of accounts that have made a transaction with the source account of the first transaction. **If** the difference between the time of the second transaction and the time of the first transaction is less than a first predetermined length of time, and the total number of accounts to have made a transaction with the source account of the first transaction is less than a predetermined number of accounts, the data tree is updated (1009) to comprise a third node connected to the second node, the third node representing the destination account of the first transaction, and is inputted (1011) into a threat detection algorithm, to thereby detect threats in a payment network using the threat detection algorithm.

## Description

### Field

The present invention relates to methods and systems to detect threats in a payment network using a threat detection algorithm by limiting the growth of a data tree for use with threat detection algorithms. **In** particular, the method and systems allow for the growth of data trees comprising transaction data to be limited and stored for input into the threat detection algorithms.

### Background

Payment network providers often employ threat detection algorithms to detect potential threats within the payment networks they maintain. **In** order to accurately detect threats within the payment network, the threat detection algorithms require large amounts of complex and precise data to use for outputting their predictions.

Existing threat detection algorithms currently use data trees, otherwise known as dispersion networks, to detect potential malicious transactions and bad actors in payment networks. The data trees consist of a network of transactions occurring between many different source and destination accounts.

Transaction data trees are built from transaction data received by the payment networks. The data trees are often built from millions, or even billions, of transactions. Large amounts of transactions such as this pose major computational challenges. Without limiting their growth, data trees can grow exponentially. Generating and controlling the generation of these data trees based on such large volumes of data uses significant amounts of computational resources, such as the time and processing power required to generate such data trees, as well as the storage required to store the data trees.

The present invention sets out to limit the growth of transaction data trees for uses with threat detection algorithms to detect threats and alleviate these problems relating to computational inefficiencies.

### Summary

According to an aspect there is provided a computer implemented method to detect threats in a payment network using a threat detection algorithm by limiting the growth of a data tree for use with the threat detection algorithm, the method comprising: i) receiving, at the server, transaction data relating to a first transaction that occurred within a payment network, the transaction data comprising details of a source account of the first transaction, details of a destination account of the first transaction and a time that the first transaction occurred within the payment network between the source account of the first transaction and the destination account of the first transaction; ii) retrieving, by the server from a database, a data tree comprising a first node connected to a second node, wherein the first node represents a source account of a second transaction that occurred within the payment network and the second node represents a destination account of said second transaction, wherein the data tree further comprises a time that the second transaction occurred within the payment network between the source account and the destination account of the second transaction, and wherein the source account of the first transaction is the same as the destination account of the second transaction; iii) determining, at the server, a difference in time between the time of the second transaction and the time of the first transaction; iv) determining, at the server, a total number of accounts that have made a transaction with the source account of the first transaction within the payment network; and if the difference between the time of the second transaction and the time of the first transaction is less than a first predetermined length of time, and the total number of accounts that have made a transaction with the source account of the first transaction is less than a predetermined number of accounts: vi) updating, at the server, the data tree to comprise a third node connected to the second node, wherein the third node represents the destination account of the first transaction; and vii) inputting, at the server, into a threat detection algorithm, the updated data tree to thereby detect threats in a payment network using the threat detection algorithm.

In this way, the growth of a data tree is limited based on two criteria, firstly that the received transaction data is only added to a data tree provided that its source account (which is already in the data tree as the second node) has not transacted with a total number of accounts above a threshold, and secondly that the time between the occurrence of the transaction already stored in the data tree and the received transaction is not above a predetermined time threshold. Advantageously, this allows for the growth of the data trees to be controlled based on the set predetermined thresholds ensuring that the data trees do not grow too large.

These predetermined thresholds have been selected to prevent growth caused by specific fraudulent network behaviour, for example, money laundering. It has been found that limiting the growth of the data tree based upon a predetermined time between the occurrence of the first and second transaction ensures that any fraudulent behaviour is more accurately identified from transactions occurring over the payment network.

The method allows for large volumes of data are therefore able to be processed, to generate sufficiently complex data trees without the data trees becoming too large for efficient use and storage. These improved data trees are then input into the threat detection algorithm, which further improves the output of the threat detection algorithm, i.e., the detection of any threats.

The time at which a transaction occurred between a source account of the transaction and a destination account of the transaction, is the time at which a payment network processes the transaction. The data tree is a data structure comprising a network of nodes connected together by edges. The nodes may represent the source and destination accounts of the first and second transactions, and the edges may represent the first and second transactions themselves between the source and destination accounts. The data tree may be a hierarchal data tree structure.

The source account of a transaction is an account in which the funds associated with the transaction are sent from (i.e., originate from with regard to that transaction). The destination account of a transaction is an account to which the funds associated with the transaction are sent (i.e., received at as a result of the transaction). The source account of the first transaction is a different account to the destination account of the first transaction, and the source account of the second transaction is different to the destination account of the second transaction.

The transaction data relating to a second transaction is received at the server from a payment network provider. The second transaction may occur between the source account and the destination account over the payment network provided by the payment network provider i.e., the payment network is used to send funds from the source account to the destination account. Since the transaction has occurred over the payment network, the payment network provider is able to determine the transaction data comprising details of the source and destination accounts, and thus is able to send the transaction data to the server.

The total number of accounts that have made a transaction with the source account of the first transaction may be the total number of accounts that have interacted with the source account by transacting with the source account. This may include the total number of accounts that have sent funds to the source account and/or received funds from the source account of the first transaction.

The method may further comprise storing, by the server, the updated data tree in the database. The method may further comprise: inputting, into the threat detection algorithm, the data tree comprising the first node and the second node, such that the threat detection algorithm may be used to determine threats. The threat detection algorithm may be a machine learning model. The threat detection algorithm may be a money laundering detection algorithm. In other arrangements, the threat detection algorithm may be any type of network security threat detection algorithm, and/or a fraud detection algorithm. The computer implemented method may be used with any type of threat detection algorithm.

Preferably, the data tree may comprise a first edge connecting the first node to the second node, the first edge representing the second transaction, and the updating, at the server, the data tree may further comprise updating, at the server, the data tree to comprise a second edge connecting the second node to the third node, the second edge representing the first transaction. In this way, the data tree comprises the first node representing the source account of the second transaction, the second node representing the destination account of the second transaction (same account as the source account of the first transaction) and the first edge linking the first node to the second node which represents the second transaction. Further, if the destination account of the first transaction is to be stored within the data tree, the data tree also includes a second edge between the second node and third node which represents the first transaction.

Preferably, the data tree may be a first data tree, and the method may further comprise: if the difference between the time of the second transaction and the time of the first transaction is equal to or greater than the first predetermined length of time, and the total number of accounts that have made a transaction with the source account of the first transaction within the payment network is equal to or greater than the predetermined number of accounts, storing, by the server in the database, the details of the source account of the first transaction and the details of the destination account of the first transaction in a second data tree.

This allows for the details of the source and destination accounts of the received, first transaction to be stored in a new, second data tree if the criteria of the time difference and number of accounts are not met. If the difference between the time of the second transaction and the time of the first transaction is greater than or equal to the first predetermined length of time and the total number of accounts that have made a transaction with the source account of the first transaction within the payment network is equal to or above the predetermined number of accounts, the first transaction will be stored in a new data tree and will not be stored in the first data tree. This ensures that the first data tree does not grow too large and prevents loss of the received details of the second transaction by storing them in a different data tree.

The details of the source account of the first transaction may be stored as a first node, representing the source account, in the second data tree, and the details of the destination account of the first transaction may be stored as a second node, representing the destination account, in the second data tree connected to the first node. An edge may then be stored connecting the first node to the second node in the second data tree, the edge representing the first transaction.

Preferably, the step of determining, at the server, the total number of accounts that have made a transaction with the source account of the first transaction over the payment network, comprises: determining, at the server, a total number of destination accounts that have made a transaction with the source account of the first transaction within the payment network, wherein the destination accounts have received funds from the source account of the first transaction; and determining, at the server, a total number of source accounts that have made a transaction with the source account of the first transaction within the payment network, wherein the source accounts have sent funds to the source account of the first transaction, and wherein the total number of accounts that have made a transaction with the source account of the first transaction comprises the total number of destination accounts and source accounts that have made a transaction with the source account of the first transaction.

In this way, the server is able to determine a total number of accounts that have made a transaction with the source account of the first transaction across the whole payment network, including any accounts that have received funds from said source account and any accounts that have sent funds to said source account. This allows for the data tree to be limited based on the total unique transactions that have involved the source account of the first transaction, where a third node representing the destination account of the first transaction is only added to the data tree if this total number of accounts is below a predetermined threshold.

Preferably, the retrieved data tree may further comprises: a fourth node connected to the first node, wherein the fourth node is a root node of the data tree and represents a source account of a third transaction, wherein a destination account of the third transaction is the same as the source account of the second transaction, and wherein a time that the third transaction occurred between the source account and the destination account of the third transaction is before the time of the second transaction, and the method may further comprise: determining, at the server, a difference in time between the time of the first transaction and the time of the third transaction; and if the difference between the time of the first transaction and the time of the third transaction is less than a second predetermined length of time, performing the steps vi) and vii).

In this way, the growth of a data tree is limited based on additional criteria that a difference between the time of the received first transaction and the time of the earliest transaction (i.e., the third transaction) previously stored in the data tree is not above a second predetermined time threshold. Advantageously, this allows for the growth of the data trees to be controlled based on not only the maximum number of accounts that have transacted with the account represented by a specific node in the data tree and the time between the most recent transaction and the received transaction, but the time difference across the whole data tree i.e., the time difference between the first occurring transaction stored in the tree (the third transaction) and the now received transaction (the second transaction). This further allows sufficiently complex data trees to be generated but without the data trees becoming too large for efficient use and storage. This second predetermined time threshold prevents the data trees from growing to an infinite size and expanding across an infinite amount of time.

The root node of the data tree may be the original node of the data tree. All other nodes, such as the first, second and third nodes for example, stored in the data tree may be derived from the root node, which may be the fourth node for example. The root node is the start of the data tree and no further nodes representing source accounts of transactions are connected to the root node. The root node is the source account of the earliest transaction to have occurred within the data tree i.e., the third transaction with the fourth node being the root node. The second predetermined length of time may be set between 10 days and 1 year.

Preferably, the data tree may be a first data tree, and the method may further comprise: if the difference between the time of the first transaction and the time of the third transaction is greater than or equal to the second predetermined length of time, storing, by the server in the database, the details of the source account of the first transaction and the details of the destination account of the first transaction in a second data tree.

This allows for the details of the source and destination accounts of the received, first transaction to be stored in a new, second data tree if the additional criteria of the total time difference across the whole data tree i.e., from the third transaction to the first transaction is not met. If the difference between the time of the second transaction and the time of the first transaction is greater than or equal to the first predetermined length of time, the total number of accounts that have made a transaction with the source account of the first transaction is above the predetermined number of accounts and the difference between the time of the first transaction and the time of the third transaction is above the second predetermined length of time, the first transaction will be stored in a new data tree and will not be stored in the first data tree. This ensures that the first data tree does not grow too large and prevents loss of the received details of the first transaction by storing them in a different data tree.

The details of the source account of the first transaction may be stored as a first node in the second data tree, and the details of the destination account of the first transaction may be stored as a second node in the second data tree connected to the first node. An edge may then be stored connecting the first node to the second node in the second data tree, the edge representing the first transaction.

Preferably, the method may further comprise, prior to the step of determining, at the server, a difference in time between the time of the second transaction and the time of the first transaction: determining, at the server, if the details of the source account of the first transaction are the same as the details of the destination account of the second transaction; and if the details of the source account of the first transaction are the same as the details of the destination account of the second transaction, the server is configured to perform the steps of iii) to vii).

Advantageously, this ensures that the first transaction is only stored in the data tree if it is related to the second transaction, and therefore the destination account of the second transaction is the same account as the source account of the first transaction. This further ensures that the data tree only includes transactions that are related to one another and involve the same accounts.

Preferably, the data tree may be a first data tree, and the method may further comprise: if the details of the source account of the first transaction are not the same as the details of the destination account of the second transaction, storing, by the server in the database, the details of the source account of the first transaction and details of the destination account of the first transaction in a second data tree.

This allows for the details of the source and destination accounts of the received, first transaction to be stored in a new, second data tree if it is unrelated to the second transaction stored in the first data tree. This ensures that the first data tree is grown only based on related transactions, and not unrelated transaction which may cause the data tree to show inaccurate relationships and transactions between different source and destination accounts across the payment network. The details of the source account of the first transaction may be stored as a first node in the second data tree, and the details of the destination account of the first transaction may be stored as a second node in the second data tree connected to the first node. An edge may then be stored connecting the first node to the second node in the second data tree, the edge representing the first transaction.

Preferably, the data tree may comprise a plurality of connected nodes, the plurality of connected nodes may comprise the first node and the second node, and the method may further comprise: extracting a sub-network from the data tree, wherein the sub-network comprises a sub-set of connected nodes from the plurality of nodes of the data tree; storing, at the server, in the database, the extracted sub-network; and inputting, into the threat detection algorithm, the extracted sub-network.

This allows for a sub-network of data to be extracted from the data tree and to be individually inputted into the threat detection algorithm, without the rest of the data tree. This provides a further method of limiting the growth of the data tree by extracting a smaller sub-network, storing the sub network and using the sub-network with the threat detection algorithm, by inputting the sub-network rather than the whole data tree into the threat detection algorithm. This may further increase the accuracy and efficiency of the output of the threat detection algorithm, as a specific sub-network may be extracted for input into said threat detection algorithm, rather than inputting a larger, more complex whole data tree. The data tree from which the sub-network is extracted from may instead be the updated data tree, wherein the updated data tree comprises a plurality of connected nodes, the plurality of connected nodes comprising the first node, the second node, and the third node.

Preferably, the plurality of connected nodes of the data tree may represent a plurality of source accounts and a plurality of destination accounts connected together to represent a plurality of transactions between the plurality of the source and the destination accounts, and extracting the sub network from the data tree may comprise: generating, at the server, a time-ordered list of the plurality of transactions stored in the data tree, wherein the time-ordered list comprises the plurality of transactions listed in order of time in which said transactions occurred; identifying, at the server, a specific transaction of interest from the time-ordered list of transactions; storing, by the server, in the database, a first node in the sub-network, the first node representing a source account of the specific transaction, and a second node, connected to the first node, in the sub-network, the second node representing a destination account of the specific transaction; determining, at the server, a set of transactions from the time-ordered list that occurred at a time later than a time of the specific transaction; and storing, by the server, in the database, further nodes representing source accounts and/or destination accounts of the set of transactions such that the sub-set of nodes of the sub-network comprises said further nodes.

Advantageously, this allows for the sub-network to be extracted from the data tree based on a transaction of interest from within the data tree. All transaction that occurred after the transaction of interest can then be stored in the sub network. As such the beginning of the data tree sub-network is the transaction of interest. This method can be used to limit the data tree inputted into the threat detection algorithm, whilst ensuring all transactions occurring from the transaction of interest are kept stored within the inputted data tree.

Preferably, the plurality of connected nodes of the data tree may represent a plurality of source accounts and a plurality of destination accounts connected together to represent a plurality of transactions between the plurality of the source and the destination accounts, and extracting the sub network from the data tree may comprise: generating, at the server, a time-ordered list of the plurality of transactions stored in the data tree, wherein the time-ordered list comprises the plurality of transactions listed in order of time in which said transactions occurred; identifying, at the server, a specific transaction of interest from the time-ordered list of transactions; storing, by the server, in the database, a first node in the sub-network, the first node representing a source account of the specific transaction, and a second node, connected to the first node, in the sub-network, the second node representing a destination account of the specific transaction; determining, at the server, from the plurality of nodes in the data tree further nodes, wherein the further nodes: connect to a node representing the details of the destination account of the identified specific transaction in the data tree; and represent source accounts and/or destination accounts of transactions that occurred after the specific transaction in the time-ordered list; and storing, by the server, in the database, the further nodes representing the source accounts and/or the destination accounts in the sub-network, such that the sub-set of nodes of the sub-network comprises said further nodes.

This ensures that the sub-network is only generated and built based on a sub-set of nodes which represent accounts involved in transaction related to the specific transaction of interest. Advantageously, this allows only relevant transaction data from the original data tree, i.e., data relating to source and destination accounts involved in transactions that occurred after and deriving from the transaction of interest are stored in the sub-network data tree. This not only provides an efficient method of limiting the growth of the data trees input into a threat detection algorithm, but also improves the output of the threat detection algorithm, by ensuring that all relevant transactions are included into the sub-network, without the sub-network becoming too large.

Preferably, the predetermined number of accounts may be set between 3 and 1million.

Preferably, the first predetermined length of time may be set between 3 minutes and 50 days.

Preferably, method, after inputting, at the server, into the threat detection algorithm, the updated data tree, may further comprise: detecting, at the server by the threat detection algorithm, a threat in the payment network. This allows for the data tree to be used as input into a threat detection algorithm to detect a threat in the payment network. The threat detection algorithm is able to use the data from the data tree, such as how many transactions have occurred between different accounts, the time of each transactions etc in order to detect whether a specific account is likely to be a threat to payment network.

The step vii) of inputting, at the server, into the threat detection algorithm, the updated data tree to thereby detect threats in the payment network using the threat detection algorithm may comprise: extracting, at the server, one or more features from the updated data tree; and inputting, at the server, into the threat detection algorithm, the one or more features of the updated data tree. This allows for the detection of threats with the threat detection algorithm to be based on inputted features from the data tree. The features of the data tree may show the relationships, such as how many connections are stored in the data tree, between each of the nodes and therefore the relationships, such as how many transactions have occurred, between each of the source and destination accounts stored in the data tree.

According to a further aspect there is provided a system to detect threats in a payment network using a threat detection algorithm by limiting the growth of a data tree, for use with a threat detection algorithm, the system configured to: i) receive, at a server, transaction data relating to a first transaction that occurred within a payment network, the transaction data comprising details of a source account of the first transaction, details of a destination account of the first transaction and a time that the first transaction occurred within the payment network between the source account of the first transaction and the destination account of the first transaction; ii) retrieve, by the server from a database, a data tree comprising a first node connected to a second node, wherein the first node represents a source account of a second transaction that occurred within the payment network, and the second node represents a destination account of said second transaction, wherein the data tree further comprises a time that the second transaction occurred within the payment network between the source account and the destination account of the second transaction, and wherein the source account of the first transaction is the same as the destination account of the second transaction; iii) determine, at the server, a difference in time between the time of the second transaction and the time of the first transaction; iv) determine, at the server, a total number of accounts that have made a transaction with the source account of the first transaction within the payment network; and v) if the difference between the time of the second transaction and the time of the first transaction is less than a first predetermined length of time, and the total number of accounts that have made a transaction with the source account of the first transaction is less than a predetermined number of accounts: vi) update, at the server, the data tree to comprise a third node connected to the second node, wherein the third node represents the destination account of the first transaction; and vii) input, at the server, into a threat detection algorithm, the updated data tree to thereby detect threats in a payment network using the threat detection algorithm.

The system may be configured to perform any of the above-mentioned method steps according to the above aspects of the invention.

According to a further aspect there is provided a non-transitory computer-readable medium comprising instructions which, when executed by a computer, cause the computer to: i) receive, at a server, transaction data relating to a first transaction that occurred within a payment network, the transaction data comprising details of a source account of the first transaction, details of a destination account of the first transaction and a time that the first transaction occurred within the payment network between the source account of the first transaction and the destination account of the first transaction; ii) retrieve, by the server from a database, a data tree comprising a first node connected to a second node, wherein the first node represents a source account of a second transaction that occurred within the payment network, and the second node represents a destination account of said second transaction, wherein the data tree further comprises a time that the second transaction occurred within the payment network between the source account and the destination account of the second transaction, and wherein the source account of the first transaction is the same as the destination account of the second transaction; iii) determine, at the server, a difference in time between the time of the second transaction and the time of the first transaction; iv) determine, at the server, a total number of accounts that have made a transaction with the source account of the first transaction within the payment network; and v) if the difference between the time of the second transaction and the time of the first transaction is less than a first predetermined length of time, and the total number of accounts that have made a transaction with the source account of the first transaction is less than a predetermined number of accounts: vi) update, at the server, the data tree to comprise a third node connected to the second node, wherein the third node represents the destination account of the first transaction; and vii) input, at the server, into a threat detection algorithm, the updated data tree to thereby detect threats in a payment network using the threat detection algorithm.

The non-transitory computer-readable medium may comprise instructions which, when executed by a computer, cause the computer to perform any of the above-mentioned method steps according to the above aspects of the invention.

According to a further aspect there is provided a computer program product comprising instructions which, when the program is executed by a computer, cause the computer to: i) receive, at a server, transaction data relating to a first transaction that occurred within a payment network, the transaction data comprising details of a source account of the first transaction, details of a destination account of the first transaction and a time that the first transaction occurred within the payment network between the source account of the first transaction and the destination account of the first transaction; ii) retrieve, by the server from a database, a data tree comprising a first node connected to a second node, wherein the first node represents a source account of a second transaction that occurred within the payment network, and the second node represents a destination account of said second transaction, wherein the data tree further comprises a time that the second transaction occurred within the payment network between the source account and the destination account of the second transaction, and wherein the source account of the first transaction is the same as the destination account of the second transaction; iii) determine, at the server, a difference in time between the time of the second transaction and the time of the first transaction; iv) determine, at the server, a total number of accounts that have made a transaction with the source account of the first transaction within the payment network; and v) if the difference between the time of the second transaction and the time of the first transaction is less than a first predetermined length of time, and the total number of accounts that have made a transaction with the source account of the first transaction is less than a predetermined number of accounts: vi) update, at the server, the data tree to comprise a third node connected to the second node, wherein the third node represents the destination account of the first transaction; and vii) input, at the server, into a threat detection algorithm, the updated data tree to thereby detect threats in a payment network using the threat detection algorithm.

The computer program product may comprise instructions which, when executed by a computer, cause the computer to perform any of the above-mentioned method steps according to the above aspects of the invention.

### Description of Figures

Figure 1 is a schematic diagram of a communication system according to the present disclosure;
Figure 2 is an example data tree generated by the data tree sever and input into the threat detection server within the system of Figure 1;
Figure 3 is a schematic diagram showing a process of limiting the growth of a data tree within the system of Figure 1;
Figure 4 is a schematic diagram showing a limitation applied to the growth of the data tree as shown in Figure 3;
Figure 5 is a schematic diagram showing a further limitation, to that of Figure 4, applied to the growth of the data tree as shown in Figure 3;
Figure 6 is a schematic diagram showing a further limitation, to that of Figures 4 and 5, applied to the growth of the data tree as shown in Figure 3;
Figure 7 is a schematic diagram of the example data tree shown in Figure 2, but with the limitations shown in Figures 4 to 6 applied to the data tree;
Figure 8 is a schematic diagram showing a process of extracting a sub-network from the data tree shown in Figure 7;
Figure 9 shows a message flow diagram between the entities of the system shown in Figure 1 to limit the growth of a data tree, as shown in Figures 3 to 8, to detect threats with a threat detection algorithm;
Figure 10 shows method steps of a computer implemented method to detect threats in a payment network using a threat detection algorithm by limiting the growth of a data tree, for use with a threat detection algorithm; and
Figure **11** shows a data processing device, according to the present disclosure.

### Detailed Description

The present disclosure relates to methods and systems to detect threats in a payment network using a threat detection algorithm by limiting the growth of a data tree, for use with a threat detection algorithm. The methods and systems allow for data trees generated within the system to be limited based on predetermined factors, in order to prevent the data trees from becoming too large or complex for efficient use and storage. This also provides better data for input into threat detection algorithms thereby improving the detection and/or prediction of any threats.

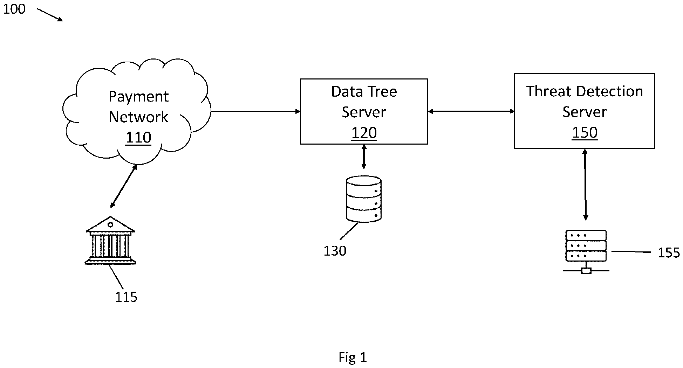

Figure 1 shows a schematic diagram of a communication system 100. The system 100 includes a payment network **110.** The payment network **110** is maintained by a payment network provider. Alternatively, the communication network **110** may be maintained by another entity, external to the payment network provider. The payment network provider may be any payment network provider such as Mastercard^{®}, for instance. However, it would be understood that the system 100 is applicable with any type of payment network provider.

The payment network 110 connects entities 115 engaging in financial transactions. The entities 115 connected through the payment network 110 includes financial institutions such as acquirer and issuer banks, credit unions, cryptocurrency providers and any other entity engaging in a financial transaction. The payment network 110 is used by the entities to engage in financial transactions, where funds are sent from one account to another account via the payment network 110. The payment network 110 may be a credit card network, an electronic-funds-transfer network, a peer-to-peer payment network or ATM networks. However, it would be understood that the system 100 is applicable with any type of payment network 110. Through monitoring the transactions that occur across the network payment 110, the payment network provider is able to access data relating to the transactions.

The communication system 100 includes a data tree server 120 and a threat detection server 150. The data tree server 120 is in communication with the payment network 110 and the threat detection server 150. The threat detection server 150 is in communication with the data tree server 120 and the payment network 110. Both the data tree server 120 and the threat detection server 150 are maintained by the payment network provider but need not necessarily be so and in other arrangements, one or both of the data tree server 120 and the threat detection server 150 may be maintained by another party.

The threat detection server 150 maintains and stores a machine learning model. The machine learning model is a threat detection algorithm 155. The threat detection algorithm 155 is configured to detect threats in the payment network 110. The threat detection algorithm is input with data retrieved from the payment network 110 in order to detect threats in the payment network 110. The threat detection algorithm 115 is a money laundering detection algorithm, such that the threat detection algorithm is configured to detect accounts using the payment network 110 that are engaging in money laundering activities.

The data tree server 120 maintains a database 130. As will be discussed in further detail below, the data tree server 120 receives transaction data from the payment network 110 and stores, in the database 130, data trees generated from the received transaction data. The data tree server 120 is then configured to provide the generated data trees stored within the tree databases 130 to the threat detection server 150.

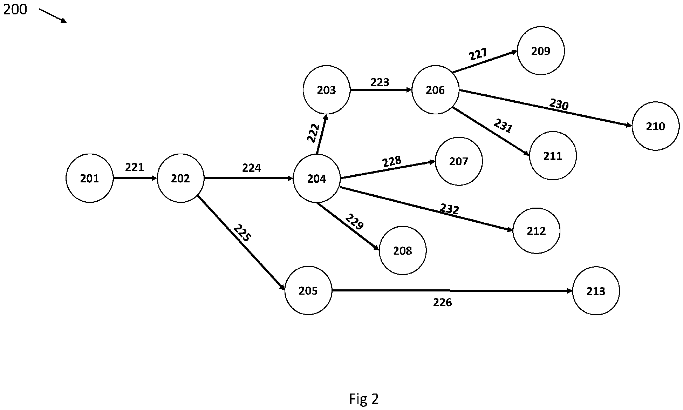

Figure 2 shows an example of data tree 200 stored within database 130 maintained by data tree server 120. The data tree 200 has been generated by data tree server 120 using transaction data received from the payment network 110. The data tree 200 shown in Figure 2 is an example, and any number of transactions may be processed by the data tree server 120 and stored within data tree 200.

The data tree 200 includes nodes 201-213 linked together in a network of transactions by edges 221-232. Each of the nodes 201-213 stored in the data tree 200 represent an account used in a transaction across the payment network 110. Each of the edges 221-232 represents a transaction that has occurred between two of the accounts represented by nodes 201-213. For example, the node 203 is linked by the edge 223 to node 206. This represents transaction data that was received by the data tree server 120, where a source account associated with node 203 transferred funds to a destination account associated with node 206.

As shown in Figure 2, node 201 is connected to node 202 by edge 221, node 202 is then connected to two other nodes, 204 and 205, by edges 224 and 225 respectively. The node 204 further connects to four other nodes. The node 204 is connected to node 203 by edge 222, node 207 by edge 228, node 212 by edge 232 and node 208 by edge 229. The node 205 is connected to node 213 by edge 226. Further, node 203 connects to node 206 by edge 223, which further connects to three other nodes, nodes 209, 210 and 211. Nodes 209, 210 and 211 are connected to node 206 by edge 227, 230 and 231 respectively.

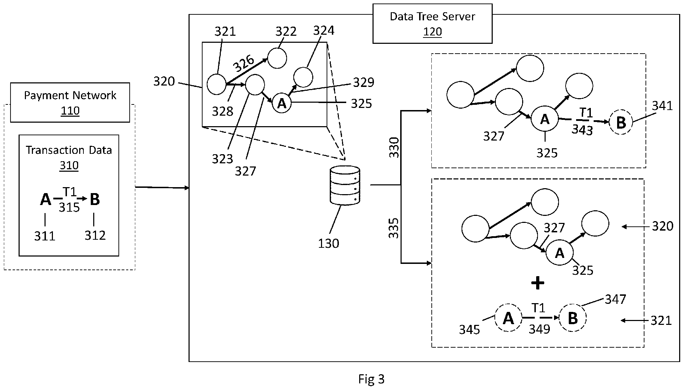

Figure 3 shows a schematic diagram of how a data tree for use with the threat detection algorithm 155 is generated within the system of Figure 1, and how such a data tree is limited in its growth. The data tree server 120 receives transaction data 310 relating to one or more transactions. Each transaction that occurs over the payment network 110 involves a source account in which funds are transferred from, and a destination account in which the funds relating to said transaction are transferred to. The source accounts and destination accounts are maintained by the entities 115 such as financial institutions. The source and destination accounts may be may be bank accounts, credit card accounts, cryptocurrency accounts, digital wallet accounts or any other type of account. The transaction data 310 includes details of a source and destination account involved in each of the plurality of transactions. The transaction data 310 further includes details of a time at which each of the transactions in the plurality of transactions occurred.

The details of each of the source accounts and each of the destination accounts involved in the plurality of transactions is an account identifier, otherwise referred to as an account ID. Each account ID relating to the source and destination accounts of the transactions is used by the payment network 110 and the data tree server 120 to identify the account associated with the account ID. Each account ID is unique to its corresponding source or destination account.

The account ID is also related to details of an owner of the corresponding account. The payment network provider further stores details of the owner, such as name, address, telephone number, account history, in relation to each account ID.

For the purpose of illustration, Figure 3 and the following description will be based on a single data tree 320 previously generated by the data tree server 120 and stored in the database 130, and transaction data 310 received from the payment network relating to a single transaction 315. However, it is understood that any number of transactions may be processed by the payment network 110 and transaction data 310 may relate to any number of transactions, which may be used by the data tree server 120 in order to generate any number of data trees. The data tree 320 shown in Figure 3 may instead be the data tree 200 shown in Figure 2.

The data tree server 120 receives the transaction data 310 from the payment network 110. The transaction data 310 includes details of a source account 311 (detonated as A in Figure 3) of the transaction 315 and details of a destination account 312 (denoted as B in Figure 3) of the transaction 315 (denoted as transaction T1). The details of the source account 311 includes source account ID, and the details of the destination account 312 includes a destination account ID. The transaction data 310 further includes details of a time in which the transaction 315 occurred between the source account 311 and the destination account 312.

The database 130 stores a data tree ID for each data tree stored in said database 130. For example, the database 130 stores a data tree ID for the data tree 320 shown in Figure 3. The database 130 also stores a list of source and destination accounts ID and their corresponding data tree ID. The corresponding data tree ID of a source or destination account is the data tree ID of a data tree stored in database 130 that includes a node representing the source or destination account in question. For example, the database 130 may store the data tree ID for the data tree 320, and further stores in relation to said data tree ID, the account ID for the account represented by node 325 shown in Figure 3, as well as any other accounts IDs and data tree IDs.

After receiving the transaction data 310, the data tree server 120 determines whether a data tree stored in the database 130 already includes a node representing the source account 311 of the received transaction 310. The data tree server 120 searches the database 130 for the account ID of the source account A 311 of transaction 315.

If the account ID of the source account 311 of the received transaction data 310 is not in the database 130, the data tree server 120 proceeds to generate a new data tree (not shown in the figures). The source account 311 and the destination account 312 are stored as a first and second node in the new data tree, with an edge linking the two nodes together representing the transaction 315. The data tree server 120 then generates a new data tree ID and stores the new data tree, along with its data tree ID, in the database 130 as a separate data tree to the data tree 320.

However, as is the case shown in Figure 3, if it is determined that the account ID of the source account 311 is stored in the database 130, the data tree server 120 determines the data tree ID stored in relation to that account ID. The data tree server 120 then retrieves the data tree relating to the determined data tree ID. This is data tree 320 as shown in Figure 3.

The data tree 320 is a data tree previously generated and stored in the database based on already processed transaction data received from the payment network 110 prior to receiving the transaction data 310. The data tree 320 includes nodes 321-325 representing accounts relating to transactions over the payment network 110, which are connected together by edges 326-329, representing the transactions themselves. As shown in Figure 3, the data tree 320 includes node 320 connected to node 322 by edge 326, and node 323 by edge 328. Node 323 is further connected to node 325 by edge 327, which is connected to node 324 by edge 329.

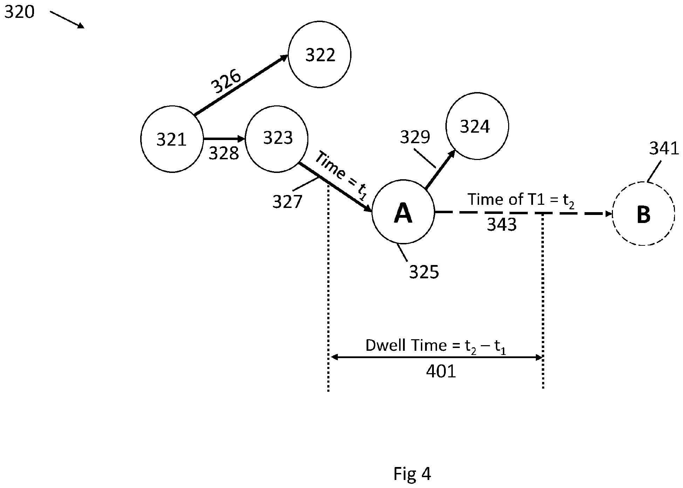

The source account 311 of received transaction 315 is the same as the destination account represented by the node 325 of transaction 327 already stored in the data tree 320. Therefore, given as the accounts match, the data tree server 120 aims to add a node into data tree 320 to represent destination account 312 of the transaction 315, and an edge linking node 325 to the added node to represent transaction 315 itself. However, limitations are applied to the growth of data tree 320 by data tree server 120, and only if these limitations are met will the additional node and edge be included into the data tree 320, as will be explained in detail below in relation to figures 4 to 6.

Provided that the limitations on the growth of the data tree 320 are met, the data tree server 120 will proceed to store an additional node 341 to represent the destination account 312 of the transaction 315 in the data tree 320. An edge 343 representing the transaction 315 is also included into the data tree 320 connecting the node 341 to the node 325. This is shown as option 330 in Figure 3.

If the limitations on the growth of the data tree are not met, even though the account represented by node 325 already in the data tree 320 matches the source account 311 of the transaction 315, the data tree server 120 proceeds to generate a new, separate data tree 321, and a corresponding data tree ID, to store in the database 130. This is shown as option 335 in Figure 3. The data tree 321 includes a first node 345 representing source account 311 of the transaction 315, a second node 347 representing the destination account 312 of the transaction 315, and an edge 349 connecting the node 345 to the node 347.

Figures 4 to 6 show limitations used by the data tree server 120 in order to limit the growth of the data trees generated. For illustrative purposes, Figures 4 to 6 show data tree 320 stored in database 130 as shown in Figure 3. However, the limitations shown in Figures 4 to 6 are applied by the data tree server 120 to each data tree stored in the database 130, including the example data tree 200 shown in Figure 2. Figures 4 to 6 are applied to the data tree 320 assuming that the source account 311 of transaction 315 is already stored in a data tree in the database 130, i.e., represented by node 325 in the data tree 320.

As shown in Figure 4, to limit the growth of data tree 320, the data tree server 120 only stores a new node 341 representing the destination account 312 of transaction 315, if the time between the transaction 315 and the transaction represented by edge 327 is within a set predetermined time period. The time between the **T1** transaction 315 and the transaction represented by edge 327 is herein referred to as the dwell time, and the set predetermined time period is referred to as the set dwell time (or otherwise referred to as maximum dwell time).

Prior to updating the data tree 320 to include the node 341 representing destination account 312 (labelled as B in Figures 3 and 4), the data tree server 120 determines from the database 130, the time in which the transaction 327 already stored in the data tree occurred. Using this retrieved time data from the database 130, as well as the transaction data 310 received from the payment network 110, which includes the time of transaction 315, the data tree server 120 determines a difference in time 401 between the occurrence of the transaction 327 and the newly received transaction 315. The time of the transaction represented by edge 327 is denoted as t₁ and the time of transaction 315 (labelled as T1) is denoted as t₂ in Figure 4.

**If** the dwell time 401 is below the set dwell time, the data tree server 120 stores the transaction data 310 as a further node 341 and edge 343 in the data tree 320, as shown in option 330 of Figure 3.

**If** the dwell time 401 is equal to or above the set dwell time, the data tree server 120 does not store the transaction data 310 as a further node 341 and edge 343 in the data tree 320. Instead, the data tree server 120 generates a new data tree and stores a first node representing the source account 311, a second node representing the destination account 312 and an edge linking the two nodes representing the transaction 315 in the new data tree, as shown in option 335 of Figure 3.

The set dwell time is decided by data tree server 120 in order to prevent transactions occurring at much later points in time being stored in data trees including corresponding accounts (i.e., the destination account of one transaction matches the source account of another, later transaction). For the example shown in Figure 4, if the time difference between transaction 327 and transaction 315 i.e., the dwell time 401 is above the set predetermined dwell time, i.e.., the difference in time is too large, the data tree 320 is limited in its growth, and transaction data 310 is not included into the data tree 320.

The maximum dwell time may be, for example, set to a time between 2 minutes hour and 50 days. Therefore, if the maximum dwell time is set to 10 days, for example, and if transaction 315 occurred over 10 days from the transaction represented by edge 327, despite the destination account of transaction 327 stored in the data tree 320 being the same account as the source account 311 of the transaction 315, the additional node 341 and edge 343 are not stored in the data tree 320. Instead, the transaction data 310 relating to the transaction 315 is stored in a different data tree, as explained above.

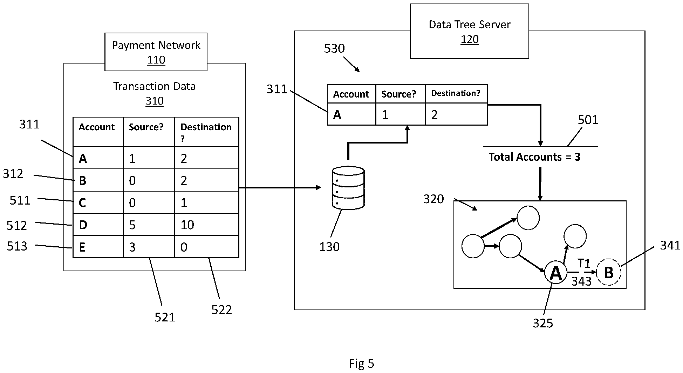

Figure 5 further shows how the data tree server 120 limits the growth of the data tree 320. The data tree server 120 not only limits the data trees generated by dwell time, as explained above and shown in Figure 4, but additionally limits the growth based on total number of accounts that have made transactions with an account represented by a node already stored in the data tree 320.

The data tree server 120 receives the transaction data 310 from the payment network 110. As shown in Figure 3, the transaction data 310 includes details of the transaction 315 which occurred between account 311 (denoted as account A) and the account 312 (denoted as account B). However, as shown in Figure 5, the transaction data 310 received from the payment network 110 further includes a total number of other accounts in which each of the accounts 311, 312, 511, 512, 513 has made a transaction with.

The transaction data 310 includes a total number of source accounts 521 and a total number of destination accounts 522 in which each account 311, 312, 511, 512, 513 within the payment network 110 has interacted with in, where an interaction includes making a transaction with said account, i.e., funds are either sent to or received from another account. In this way, the transaction data 310 includes details of how many times each account 311, 312, 511, 512, 513 has acted as a source account in a transaction with a different destination account, and how many times each of the accounts 311, 312, 511, 512, 513 has acted as a destination account in a transaction with a different source account. The transaction data 310 does not include repeated transactions occurring between the same accounts, only the total number of different accounts each of the accounts 311, 312, 511, 512, 513 has transacted with across the payment network. The transaction data 310 is received by the data tree server 120 and stored in the database 130. By way of example Figure 5 shows transaction data 530 relating only to the source account 311 of transaction 315 shown in Figure 3. The transaction data 530 is a sub-section of the transaction data 310 received which relates to all accounts 311, 312, 511, 512, 513. Transaction data 530 relates to the account 311, given as the account 311 is the source account of the transaction 315 (denoted at transaction T1), which is the transaction received by the payment network 110 which is to be added to the data tree 320.

As shown in Figure 5, the transaction data 530 relating to the account 311 indicates that that the account 311 has made at least one transaction with one other source account (in which account 311 was a destination account of said transaction(s)) and has made at least one transaction with each of two other destination accounts (in which account 311 was a source account of said transactions). Therefore, the total number of accounts 501 that account 311 has made a transaction with is three.

When limiting the growth of the data tree 320, the data tree server will only store a new node 341 representing the destination account 312 of the transaction 315, if the total number of accounts 501 the source account 311 of transaction 315 has transacted with is less than a set number of accounts, herein referred to as the busyness degree of the data tree 320. The busyness degree sets a maximum number of accounts in which each account represented by a node in the data tree 320 is to have transacted with before a further node and transaction is stored in the data tree 320.

Prior to updating the data tree 320 to include the node 341 representing destination account 312, the data tree server 120 determines a total number of accounts 501 which have made a transaction with the account 311 represented by the node 325 (which is to be connected to the new node 341). The node in which the node 341 is to be connected to is the node 325 already stored in the data tree 320 that represents the source account 311 of the received transaction 315.

If the total number of accounts 501 is below the set busyness degree, the data tree server 120 stores the transaction data 310 as the further node 341 and the edge 343 in the data tree 320, as shown in option 330 of Figure 3, and further shown in Figure 5.

If the total number of accounts 501 is equal to or above the set busyness degree, the data tree server 120 does not store the transaction data 310 as a further node 341 and edge 343 in the data tree 320. Instead, the data tree server 120 generates a new data tree and stores a first node representing the source account 311, a second node representing the destination account 312 and an edge linking the two nodes representing the transaction 315 in the new data tree, as shown in option 335 of Figure 3 (and not shown in Figure 5).

The busyness degree is set by the data tree server 120 in order to prevent too many connections (i.e., edges) being stored in the data tree 320, and thus the data tree 320 becoming too complex. For the example shown in Figure 5, if the total number of accounts 501 to have transacted with the account 311 represented by node 325 is equal to or above the set busyness degree, the number of transactions between the account 311 and other accounts within the payment network **110** is already too many, the data tree 320 is limited in its growth, and transaction data 310 is not included into the data tree 320. Instead, the transaction data 310 relating to the transaction 315 is stored in a different data tree, as explained above.

The busyness degree of the data tree may be, for example, 3 nodes. As shown in Figure 5, the transaction data 310 received by the payment network **110** indicates that the account 311 has transacted with a total of three other accounts. The busyness degree is set to 3, therefore the data tree server 120 will determine that the total number of accounts 501 is equal to the busyness degree, and as such is not below the busyness degree. Therefore, the data tree server 120 does not update the data tree 320 to include the node 341 representing the destination account of transaction 315 and the edge 343 linking the node 341 to the node 325.

However, if for example, the busyness degree is set to 4 total nodes, given as the account 311 has only transacted with a total of three other accounts, , the total number of accounts 501is below the busyness degree. Therefore, the data tree server 120 will proceed to update the data tree 320 to include the node 341 representing the destination account of transaction 315 and the edge 343 linking the node 341 to the node 325.

Further, as shown in Figure 5, the data tree server 120 applies both the limitations of dwell time and busyness degree before growing data tree 320 by including the edge 343 and the node 341 into the data tree 320. Therefore, only if the difference in time 401 between the transaction represented by edge 327 and the received transaction 315 is below the dwell time, and the total number of accounts 501 that have transacted with the account 311is below the busyness degree, will the data tree server 120 update the data tree 320 to include the transaction data 310 received from the payment network **110.**

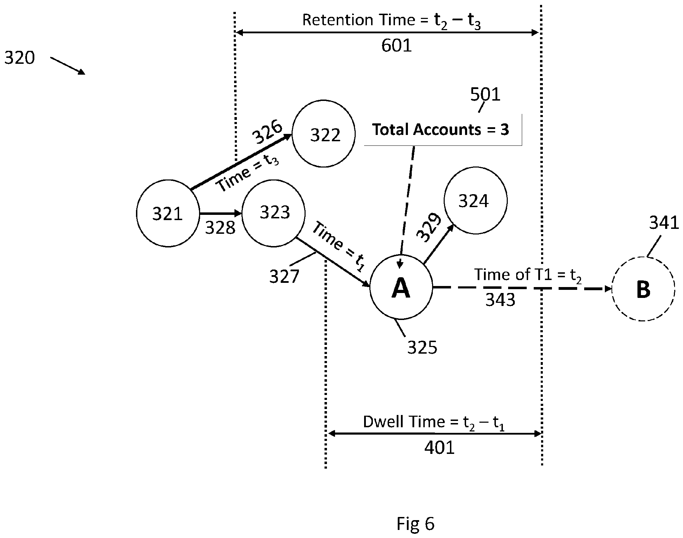

Figure 6 further shows how the data tree server 120 limits the growth of the data tree 320. The data tree server 120 not only limits the data trees generated by dwell time and busyness degree, as explained above and shown in Figures 4 and 5, but additionally limits the growth based on a total time 601 that has elapsed from a root transaction of the data tree 320 to the newly received transaction 315.

The data tree server 120 only stores a new node 341 representing the destination account 312 of transaction 315, if the time 601 between the first, root transaction stored in the data tree 320 (the first transaction being the transaction stored in the data tree 320 which is from a source account represented by a root node of the data tree 320), and the time t₂ of the newly received transaction 315 (labelled as T1) is within a set predetermined time period. The time between the root transaction and the transaction 315 is herein referred to as the retention time, and the set predetermined time period is referred to as the maximum retention time. The maximum retention time is larger than the maximum dwell time.

The root transaction of the data tree 320 is the transaction that occurred first compared to other transactions stored in the data tree 320. The root transaction is also the transaction that occurred between a source account represented by the root node of the data tree, which as shown in Figure 6 is node 321, and another node representing the destination account of that transaction. For example, the root transaction of data tree 320 is the transaction represented by edge 326, provided that this transaction occurred before the transaction represented by edge 328, which is also connected to the root node 321. Therefore, in this example, the maximum retention time 601 of the data tree 320 is the time difference between the time of transaction 326 (which is denoted as t₃) and the time t₂ of the newly received transaction 315 (transaction T1). The root transaction may be directly, or indirectly, connected to the node 325 in which the new transaction data 310 is to be connected to.

Prior to updating the data tree 320 to include the node 341 representing destination account 312, the data tree server 120 determines from the database 130, the time t₃ in which the root transaction 326 already stored in the data tree occurred. Using this retrieved time data from the database 130, as well as the transaction data 310 received from the payment network 110, which includes the time of transaction 315, the data tree server 120 determines a difference in time 601 between the occurrence of the root transaction 326 already stored in the data tree 320 and the newly received transaction 315 i.e., the data tree server 120 determines the retention time 601.

**If** the retention time 601 is below the set maximum retention time, the data tree server 120 stores the transaction data 310 as a further node 341 and edge 343 in the data tree 320, as shown in option 330 of Figure 3.

If the retention time 601 is equal to or above the set maximum retention time, the data tree server 120 does not store the transaction data 310 as a further node 341 and edge 343 in the data tree 320. Instead, the data tree server 120 generates a new data tree and stores a first node representing the source account 311, a second node representing the destination account 312 and an edge linking the two nodes representing the transaction 315 in the new data tree, as shown in option 335 of Figure 3.

The maximum retention time is set by the data tree server 120 in order to prevent the data trees generated from spanning a large amount of time from the first transaction to the last (i.e., the data trees becoming too large), and rendering the data trees too complex for efficient use with the threat detection algorithm 155. For the example shown in Figure 6, if the time difference 601 between transaction 326 and transaction 315 is above the set maximum retention time, i.e.., the difference in time is too large, the data tree 320 is limited in its growth, and transaction data 310 is not included into the data tree 320.

The maximum retention may be, for example, set to a time between 48 and 36 hours. Therefore, if the set maximum retention time is determined to be 48 hours, for example, and if transaction 315 occurred over 48 hours from the transaction represented by edge 326, despite the destination account of transaction 327 stored in the data tree 320 being the same account as the source account 311 of the transaction 315, the additional node 341, and edge 343, are not stored in the data tree 320. Instead, the transaction data 310 relating to the transaction 315 is stored in a different data tree, as explained above.

Further, as shown in Figure 6, the data tree server 120 applies all the limitations of dwell time, busyness degree and maximum retention time before growing the data tree 320 by including the edge 343 and the node 341 into the data tree 320. Therefore, only if the difference in time 401 between the transaction represented by edge 327 and the received transaction 315 is below the dwell time, the total number of accounts 501 that have made a transaction with the account represented by the node 325 is below the busyness degree, and the difference in time between the transaction represented by edge 326 and the received transaction 315, will the data tree server 120 update the data tree 320 to include the transaction data 310 received from the payment network 110.

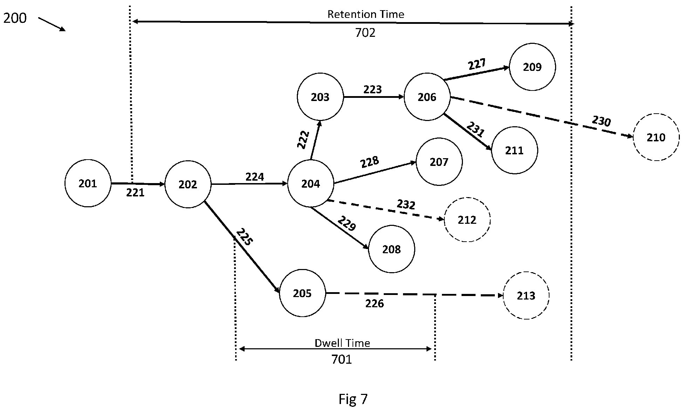

Figure 7 shows the data tree 200 of Figure 2, but with the limits described above in relation to Figures 4 to 6 applied to the data tree 200. As shown in Figure 7, node 213 and edge 226 are not to be included into the data tree 200, upon receiving the related transaction data from the payment network 110, given as the dwell time 701 between the transaction represented by edge 225 and the transaction 226 is above the set dwell time. This is shown in Figure 7 by the dotted edge 226 and the dotted lines of the node 213.

Node 212 and edge 232 (shown in dotted lines) are also not to be included into the data tree 200 upon receiving the related transaction data from the payment network 110, given as the total number of accounts that have made a transaction with the account represented by the node 204, in which node 212 is to be connected to, is above the busyness degree set by the data tree server 120.

For the example shown in Figure 7, the busyness degree is set to 8, and for example, at the point of receiving transaction data relating to the edge 232 and node 212, the account represented by node 204 has already made a transaction with accounts represented by nodes 202, 203, 207 and 208, as well as four further accounts within the payment network that are not stored within the data tree 200, for example. Therefore, in adding the node 212 connected to the node 204, the total number of accounts that have transacted with the account represented by node 204 would be 8. This is equal to the set busyness degree, and therefore the data tree server 120 will not store the edge 232 and the node 212 into the data tree 200.

Further, based on the predetermined maximum retention time, the node 210 would not be included into the data tree 200. The maximum retention time 702 between the time of the root transaction 221 and the time of transaction 230 (the transaction relating to the node 210) is above the predetermined maximum retention time, and therefore the node 210 and edge 230 will not be stored in the data tree 200 (at the time of receiving the relevant transaction data from the payment network 110), as shown in dotted lines in Figure 7.

In addition to the limitations shown in Figures 4 to 6 applied by data tree server 120 in determining whether to store a newly received transaction in a data tree, the data tree server 120 further extracts a sub-network of nodes and edges from the stored data trees in the database 130.

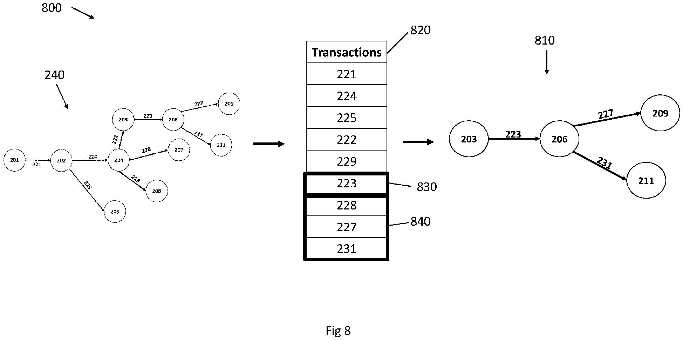

Figure 8 shows an example process 800 of extracting a sub-network 810 from the data tree 240 stored in the database 130. The data tree 240 of Figure 8 is an updated version of the data tree 200 of Figure 2, with the dwell time, busyness degree and maximum retention time applied to the data tree 200 (such that it does not include nodes 210, 212, and 213 and corresponding edges 230, 232, and 226), as explained above and shown in Figure 7.

The data tree server 120 retrieves the updated data tree 240 from the database 130. The data tree server 120 proceeds to generate a list 820 of the transactions stored in the retrieved data tree 240. This is shown as a list 820 of edges 221-231 included in data tree 240. The list comprises details of each transaction stored in the data tree 240, such as the details of the accounts involved in the transaction and the time in which said transaction occurred.

The list 820 is generated such that lists the transactions 221-221 in time order. Therefore, each transaction in the list occurred at a later point in time to the preceding transaction stored in the list. As shown in Figure 8, transaction 221 occurred at the earliest time compared to other transactions 224 - 231 stored in the data tree 240. Therefore, details of the transaction 221 are stored first in the list 820. Every transaction stored thereafter in the list 820 is stored in time order, depending on the time in which each transaction occurred. For example, transaction 225 occurred before transaction 224, therefore details of the transaction 224 is stored after details of the transaction 225 in the list 820.

A specific transaction 830 of interest is then selected from the time-ordered list of transactions 820. For the example of Figure 8, the transaction represented by edge 223 is determined as the transaction 830 of interest. The specific transaction 830 may be determined, for example, by a financial institution of the plurality of entities 115 connected to the payment network 110. The financial institution selects transaction 830 as a potential risk, and for example, may wish to obtain a sub-network of data based upon this transaction to determine whether a threat may occur from the accounts involved in the transaction 830. Alternatively, the data tree server 120 may determine the specific transaction itself.

A sub-network 810 is generated by the data tree server 120. Initially, the data tree server 120 stores the nodes 203, 206 representing the source and destination accounts involved in the transaction of interest 830 as the beginning of the sub-network 810. The edge 223 is also stored in the sub-network, connecting the source and destination account nodes 203, 206 of the specific transaction 830.

The data tree server 120 determines all the transactions 840, that are stored in the data tree 240, that occurred after the specific transaction 830 (and are thus stored after the specific transaction 830 in the time-ordered list 820). In this case, these are transactions represented by edges 228, 227, 231 as shown in list 820.

In addition, the data tree server 120 determines if the later stored transactions 840 are related to and derived from the specific transaction 830 of interest. For example, as can be seen from Figure 8, transaction 228 has occurred later than the transaction 223 of interest but is not derived from the transaction 223. Edge 228 is not connected by the direction of the transactions, either directly or indirectly, to the destination account of node 206 of the transaction of interest (edge 223 in this case). In this case, the sub-network would not be built to include the transaction data relating to edge 228.

Therefore, the data tree server 120 determines whether the set of later stored transactions 840 are derived from the transaction of interest 830. This is based on whether the node of the source account of a transaction in the set of later stored transactions 840 is derived from the node 206 representing the destination account of the specific transaction 830 of interest.

Any later stored transactions 840 in the list 820 are not included into the sub-network, if it is determined that said transaction does not derive from the transaction of interest 830. As explained above, this is the transaction represented by edge 228, and as such the sub-network 810 does not include the edge 228, or its associated source and destination account nodes 204, 207, into the sub-network data tree 810.

The data tree server 120 determines a sub-set of nodes 206, 209, 211 stored in the data tree 240 that represent the accounts of the later, relevant transactions 840 of list 820, not including transaction 228, which is not included as explained above. The data tree server 120 builds the sub-network 810 by adding the identified sub-set of nodes 206, 209, 211 connected together by their corresponding edges 223, 227, 231 in the newly generated sub-network 810, already comprising the nodes 203, 206 of the transaction 830 of interest.

In this way, the data tree server 240 is able to determine a sub-set of nodes and transactions, from within a stored data tree, deriving from a transaction of interest, and generating a sub-network with the sub-set of nodes and transactions. This allows for the data tree server 120 to further limit the growth of data trees with transaction data received from the payment network 110, by extracting a smaller, sub-network from the larger, more complex data trees.

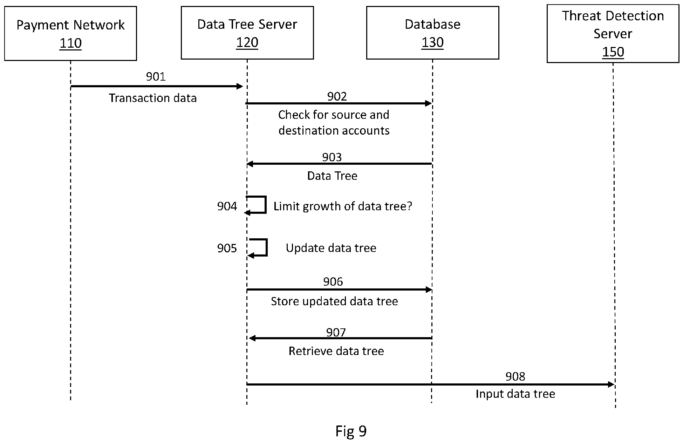

Figure 9 shows a message flow diagram between the entities of the system shown in Figure 1 when detecting threats in a payment network using a threat detection algorithm by limiting the growth of a data tree as shown in Figures 3 to 8. The message flow diagram of Figure 9 applies once it is determined by the data tree server 120 that the source account of the received transaction data 310 is the same account as the destination account represented by a node already stored in a data tree in the database 130 (in the case of Figures 3 to 7 this is node 325 of data tree 320). If this is not the case, as explained above in relation to Figure 3, the recently received transaction data is included into a new, separate data tree and stored in database 130.

At step 901, the data tree server 120 receives transaction data from the payment network 110. For illustrative purposes the message flow diagram of Figure 9 will be described in relation to transaction data 310 as shown in Figure 3. The transaction data 310 includes the source account ID corresponding to the source account 311 of the second transaction, the destination account ID corresponding to the destination account 312 of the second transaction and the time in which transaction 315 occurred between the two accounts.

At step 902, the data tree server 120 checks the database 130 to determine if the source account ID of the transaction 315 is the same as any of the previously stored account IDs in data trees stored within database 130. The data tree server 120 determines that the data tree 320 includes a node representing a destination account that is the same as the source account 311 of the transaction 315.

At step 903, the data tree server 120 retrieves the data tree 320 including the corresponding account from the database 130. The data tree 320 is retrieved by the data tree server 130 by determining a data tree ID from the database 130 that is stored in association with the matching account ID. The data tree 320 stored with the determined data tree ID is then retrieved. It is noted that the data tree server 120 may have already retrieved the data tree 320 from the database 130 prior to receiving the transaction data at step 901, and checks whether an account from the data tree 320 matches an account of the transaction data 310 (i.e., step 901 occurs after step 903).

At step 904, the data tree server 120 looks to update the retrieved data tree 320. Updating the data tree 320 includes storing a node 341 in the data tree 320 representing the destination account 312 of the transaction 315 and an edge 343 representing the transaction 315 linking the new node 341 to the node of the data tree 320 in which it is to be connected to.

However, before updating the retrieved data tree 320 at step 903, the data tree server 120 determines whether adding a new node and edge into the data tree 320 would contravene limits set by the data tree server 120 on the growth of data trees stored within database 130. As shown in Figures 3 to 7, the data tree server 120, determines whether a difference in the time between the time of the transaction 315 and the time of the transaction in which the transaction 315 is to be connected to, is below the dwell time. The data tree server 120 also determines if a total number of accounts that have interacted with the account 311 of the transaction 315 that is represented by the node already stored in the data tree is below the set busyness degree. Further, the data tree server 120 determines if a time elapsed between the first, root transaction stored in the retrieved data tree 320 and the newly received transaction 315 is below the maximum retention time.

**If** the above limitations are met, as shown in Figure 9, at step 905 the data tree server 120 updates the data tree 320 with the transaction data received at step 901. The data tree server 120 stores, at step 906, the updated data tree 320 in the database 130.

At step 907, the data tree server 120 retrieves the updated data tree 320 from the database 130. This may be instantly after step 906, or it may be at a later point in time when data from the data tree 320 is required by the data tree server 120 and the threat detection server 150 for input into the threat detection algorithm 155.

At step 908, the data tree 320 is input into the threat detection algorithm 155. Data from the retrieved data tree 320 is sent to the threat detection server 150 for input into the threat detection model 155. To input the transaction data within the data tree 320 into the threat detection algorithm 155, features are extracted from the data tree 320. A list of features of the data tree 320 is generated by the threat detection server 150. The list of data tree 320 features captures characteristics of the transaction that have occurred between the network of different source and destination accounts in the data tree 320.

The list of features is converted into a set of vectors by the threat detection server 150. The threat detection server 150 then inputs the plurality of vectors into the threat detection model 155, such that the threat detection model outputs predictions based on the input vectors. The threat detection server 150 further utilises additional data received from the payment network 110 and processed by the data tree server 120 pertaining to the accounts involved in the transactions of the data tree 320, such as account history information.

Attentively to steps 905 and 906 shown in Figure 9, if it is determined by the data tree server 120 that the difference in the time between the time of the transaction 315 and the time of the transaction in which the transaction 315 is to be connected to, is equal to or above the dwell time, or if the total number of accounts which have made a transaction with the account 311 represented by the node already stored in the data tree is equal to or above the set busyness degree, or if a time elapsed between the first, root transaction stored in the retrieved data tree 320 and the newly received transaction 315 is equal to or above the maximum retention time, the data tree server 120 does not perform steps 905 and 906.

Instead, the data tree server 120 generates a new data tree and stores a first node presenting the source account 311, a second node representing the destination account 312 and an edge linking the two nodes to represent the received transaction 315. **In** this case, the data tree server 120 further stores the newly generated data tree in the database 130, as a separate data tree compared to the already stored data tree 320 (which has not been updated based on the limits applied to its growth).

Steps 907 and 908 as explained above may still be performed by the data tree server 120, with the data tree 320 or the newly generated data tree including the transaction data received at step 901.

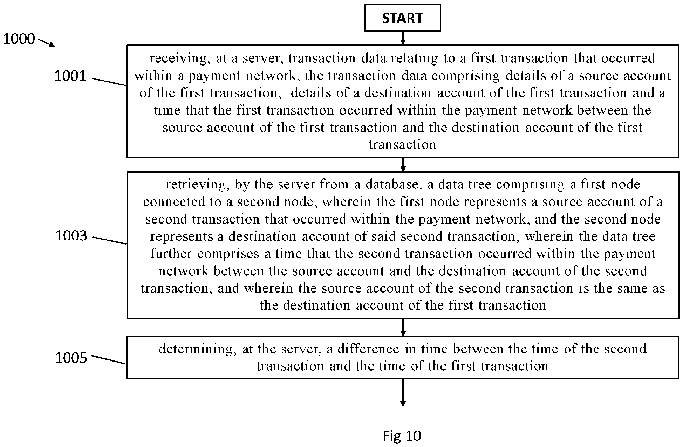

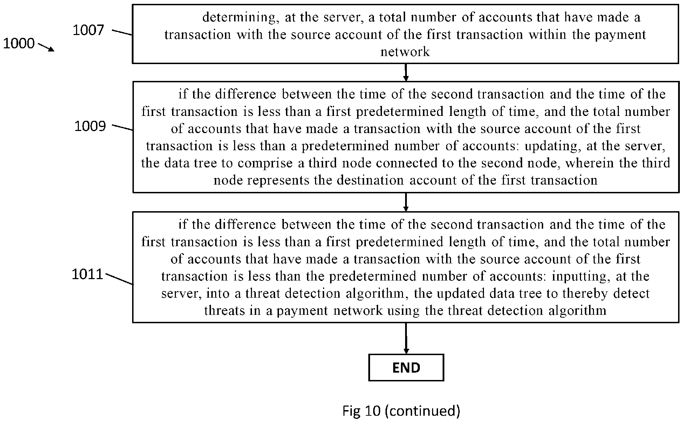

Figure 10 shows a flow diagram of a computer implemented method 1000 to detect threats in a payment network using a threat detection algorithm by limiting the growth of a data tree, for use with a threat detection algorithm.

At step 1001 the method involves, receiving, at a server, transaction data relating to a first transaction that occurred within a payment network, the transaction data comprising details of a source account of the first transaction, details of a destination account of the first transaction and a time that the first transaction occurred within the payment network between the source account of the first transaction and the destination account of the first transaction.

At step 1003 the method involves, retrieving, by the server from a database, a data tree comprising a first node connected to a second node, wherein the first node represents a source account of a second transaction that occurred within the payment network, and the second node represents a destination account of said second transaction, wherein the data tree further comprises a time that the second transaction occurred within the payment network between the source account and the destination account of the second transaction, and wherein the source account of the first transaction is the same as the destination account of the second transaction.

At step 1005 the method involves, determining, at the server, a difference in time between the time of the second transaction and the time of the first transaction.

At step 1007 the method involves, determining, at the server, a total number of accounts that have made a transaction with the source account of the first transaction within the payment network.

At step 1009 the method involves, if the difference between the time of the second transaction and the time of the first transaction is less than a first predetermined length of time, and the total number of accounts that have made a transaction with the source account of the first transaction is less than a predetermined number of accounts: updating, at the server, the data tree to comprise a third node connected to the second node, wherein the third node represents the destination account of the first transaction.

At step 1011 the method involves, if the difference between the time of the second transaction and the time of the first transaction is less than a first predetermined length of time, and the total number of accounts that have made a transaction with the source account of the first transaction is less than a predetermined number of accounts: inputting, at the server, into a threat detection algorithm, the updated data tree to thereby detect threats in a payment network using the threat detection algorithm.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

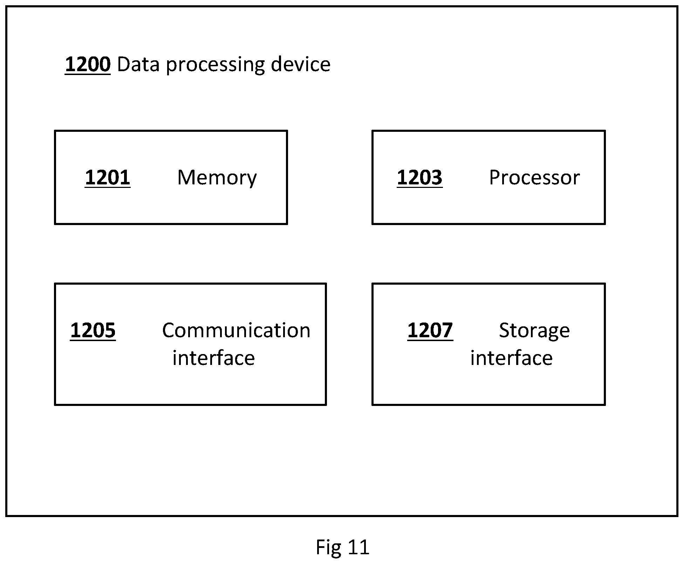

Similarly, any steps of any of the methods described herein may be performed by data processing devices. By way of example, Figure 11 shows, in schematic form, a data processing device 1200 that is suitable for performing the functions of the servers of the payment network 110, the data tree server 120, the threat detection server 150, or any other entity. The data processing device 1200 may automatically perform any of the methods described herein.

Data processing device 1200 includes a processor 1203 for executing instructions. Instructions may be stored in a memory 1201. Processor 1203 may include one or more processing units (e.g., in a multi-core configuration) for executing instructions. The instructions may be executed within a variety of different operating systems on the data processing device 900, such as UNIX, LINUX, Microsoft Windows^{®}, etc. More specifically, the instructions may cause various data manipulations on data stored in memory 1201 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 1203 is operatively coupled to a communication interface 1205 such that data processing device 1200 can communicate with a remote device, such as another data processing device of the system. For example, communication interface 1205 may receive communications from another member of the system.

Processor 1203 may also be communicatively coupled to a storage device such as a database, depending on the function of data processing device 1200 within the context of the system. The storage device is any computer-operated hardware suitable for storing and/or retrieving data, where in the case of a secure storage medium the data is stored and retrieved securely.

The storage database may, for example, include the database 140, and it can be external to data processing device 1200 and located remotely. Alternatively, it can be integrated in data processing device 1200. For example, data processing device 1200 may include memory 1201 as one or more hard disk drives acting as a storage database. Alternatively, where the storage database is external to data processing device 1200, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 1203 can be operatively coupled to the storage device (storage database) via a storage interface 1207. Storage interface 1207 is any component capable of providing processor 1203 with access to the storage device. Storage interface 1207 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 803 with access to the storage device.

Memory 1201 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

Although it is described that the data tree server 120 and the threat detection server 150 are maintained by the same payment network provider that maintains the payment network 110, in other arrangements the data tree server 120 and the threat detection server 150 may be maintained by a different entity to the payment network 110 and may be maintained by separate entities to one another. In this alternative arrangement, the data tree server 120 and the threat detection server 150 have been given access to receive the transaction data 310 obtained by the payment network provider from the payment network 110.

Although it is shown in Figure 1 that the threat detection server 150 is only in communication with the data tree server 120, in other arrangements the threat detection server 150 may be in direct communication with the payment network 110 as well as the data tree server 120.

The threat detection algorithm 155 is a money laundering algorithm. However, the data trees stored in database 130 may be used with any type of threat detection algorithm, such as a fraud detection algorithm or a network security threat detection algorithm. Therefore, a threat detected by the threat detection server 150 may be a threat of money laundering, fraudulent activity and/or a network security threat.

It is described above and shown in Figures 2 to 8, that each of the data trees 200, 320, 240 include nodes that represent accounts and edges connecting the nodes together representing transactions. However, in alternative arrangements, each of the nodes in the data trees 200, 320, 240 may represent transactions and each of the edges may represent the accounts.

Although it is shown in Figure 5 and described in the description above that the dwell time and busyness degree are applied together to limit the growth of a data tree, as shown in Figure 5, and that the dwell time, busyness degree and maximum retention time are applied together to limit the growth of a data tree, as shown in Figure 6, in other arrangements any combination of the limitations showed in Figures 4 to 6 may be applied to the growth of the data trees by data tree server 120, including only one of dwell time, busyness degree and maximum retention time.

Although it is described that the updated data tree 240 is used in the process 800 of Figure 8 to extract the sub-network 810, in alternative arrangements any data tree stored in the database 130, including the data tree 200 of Figure 2 or the data tree 320 shown in Figures 3 to 6, can be used in the process 800. The process 800 of extracting the sub-network can also occur without the data tree server 120 applying the limitations as showed in Figures 4 to 7.

As described above, at step 907 of Figure 9, the updated data tree, which is updated at step 905, is retrieved, and sent to the threat detection server 150. However, steps 907 and 908 may occur with any data tree stored in the database 130, including nay sub-network that has been extracted according to process 800. Further, a data tree stored in database 130 that does not include a node representing an account corresponding to either of the accounts received in transaction data from the payment network 110 at step 901, may also be retrieved from the database 130 and sent to the threat detection server 150.

## Claims

1. A computer implemented method to detect threats in a payment network using a threat detection algorithm by limiting the growth of a data tree for use with the threat detection algorithm, the method comprising:
i) receiving, at a server, transaction data relating to a first transaction that occurred within a payment network, the transaction data comprising details of a source account of the first transaction, details of a destination account of the first transaction and a time that the first transaction occurred within the payment network between the source account of the first transaction and the destination account of the first transaction;
ii) retrieving, by the server from a database, a data tree comprising a first node connected to a second node, wherein the first node represents a source account of a second transaction that occurred within the payment network, and the second node represents a destination account of said second transaction, wherein the data tree further comprises a time that the second transaction occurred within the payment network between the source account and the destination account of the second transaction, and wherein the source account of the first transaction is the same as the destination account of the second transaction;
iii) determining, at the server, a difference in time between the time of the second transaction and the time of the first transaction;
iv) determining, at the server, a total number of accounts that have made a transaction with the source account of the first transaction within the payment network; and
v) if the difference between the time of the second transaction and the time of the first transaction is less than a first predetermined length of time, and the total number of accounts that have made a transaction with the source account of the first transaction is less than a predetermined number of accounts:
vi) updating, at the server, the data tree to comprise a third node connected to the second node, wherein the third node represents the destination account of the first transaction; and
vii) inputting, at the server, into a threat detection algorithm, the updated data tree to thereby detect threats in a payment network using the threat detection algorithm.

2. The computer implemented method according to claim 1, wherein the data tree comprises a first edge connecting the first node to the second node, the first edge representing the second transaction, and wherein updating, at the server, the data tree further comprises:
updating, at the server, the data tree to comprise a second edge connecting the second node to the third node, the second edge representing the first transaction.

3. The computer implemented method according to any preceding claim, wherein the data tree is a first data tree, and the method further comprises:
if the difference between the time of the second transaction and the time of the first transaction is equal to or greater than the first predetermined length of time, and the total number of accounts that have made a transaction with the source account of the first transaction within the payment network is equal to or greater than the predetermined number of accounts,
storing, by the server in the database, the details of the source account of the first transaction and the details of the destination account of the first transaction in a second data tree.

4. The computer implemented method according to any preceding claim, wherein determining, at the server, a total number of accounts that have made a transaction with the source account of the first transaction over the payment network, comprises:
determining, by the server, a total number of destination accounts that have made a transaction with the source account of the first transaction, wherein the destination accounts have received funds from the source account of the first transaction; and
determining, by the server, a total number of source accounts that have made a transaction with the source account of the first transaction, wherein the source accounts have sent funds to the source account of the first transaction, and
wherein the total number of accounts that have made a transaction with the source account of the first transaction comprises the total number of destination accounts and source accounts that have made a transaction with the source account of the first transaction.

5. The computer implemented method according to any preceding claim, wherein the retrieved data tree further comprises:
a fourth node connected to the first node, wherein the fourth node is a root node of the data tree and represents a source account of a third transaction, wherein a destination account of the third transaction is the same as the source account of the second transaction, and wherein a time that the third transaction occurred between the source account and the destination account of the third transaction is before the time of the second transaction, and the method further comprises:
determining, at the server, a difference in time between the time of the first transaction and the time of the third transaction; and
if the difference between the time of the first transaction and the time of the third transaction is less than a second predetermined length of time, performing the steps vi) and vii).

6. The computer implemented method according to claim 5, wherein the data tree is a first data tree, and the method further comprises:
if the difference between the time of the first transaction and the time of the third transaction is greater than or equal to the second predetermined length of time,
storing, by the server in the database, the details of the source account of the first transaction and the details of the destination account of the first transaction in a second data tree.

7. The computer implemented method according to any preceding claim, the method further comprising, prior to the step of determining, at the server, a difference in time between the time of the second transaction and the time of the first transaction:
determining, at the server, if the details of the source account of the first transaction are the same as the details of the destination account of the second transaction; and
if the details of the source account of the first transaction are the same as the details of the destination account of the second transaction, the server is configured to perform the steps of iii) to vii).

8. The computer implemented method according to claim 7, wherein the data tree is a first data tree, and the method further comprises:
if the details of the source account of the first transaction are not the same as the details of the destination account of the second transaction, storing, by the server in the database, the details of the source account of the first transaction and details of the destination account of the first transaction in a second data tree.

9. The computer implemented method according to any preceding claim, wherein the data tree comprises a plurality of connected nodes, the plurality of connected nodes comprising the first node and the second node, the method further comprising:
extracting a sub-network from the data tree, wherein the sub-network comprises a sub-set of connected nodes from the plurality of nodes of the data tree;
storing, at the server, in the database, the extracted sub-network; and
inputting, into the threat detection algorithm, the extracted sub-network.

10. The computer implemented method according to claim 9, wherein the plurality of connected nodes of the data tree represent a plurality of source accounts and a plurality of destination accounts connected together to represent a plurality of transactions between the plurality of the source and the destination accounts, and wherein extracting the sub network from the data tree comprises:
generating, at the server, a time-ordered list of the plurality of transactions stored in the data tree, wherein the time-ordered list comprises the plurality of transactions listed in order of time in which said transactions occurred;
identifying, at the server, a specific transaction of interest from the time-ordered list of transactions;
storing, by the server, in the database, a first node in the sub-network, the first node representing a source account of the specific transaction, and a second node, connected to the first node, in the sub-network, the second node representing a destination account of the specific transaction;
determining, at the server, a set of transactions from the time-ordered list that occurred at a time later than a time of the specific transaction; and
storing, by the server, in the database, further nodes representing source accounts and/or destination accounts of the set of transactions such that the sub-set of nodes of the sub-network comprises said further nodes.

11. The computer implemented method according to claim 9, wherein the plurality of connected nodes of the data tree represent a plurality of source accounts and a plurality of destination accounts connected together to represent a plurality of transactions between the plurality of the source and the destination accounts, and wherein extracting the sub network from the data tree comprises:
generating, at the server, a time-ordered list of the plurality of transactions stored in the data tree, wherein the time-ordered list comprises the plurality of transactions listed in order of time in which said transactions occurred;
identifying, at the server, a specific transaction of interest from the time-ordered list of transactions;
storing, by the server, in the database, a first node in the sub-network, the first node representing a source account of the specific transaction, and a second node, connected to the first node, in the sub-network, the second node representing a destination account of the specific transaction;
determining, at the server, from the plurality of nodes in the data tree further nodes, wherein the further nodes:
connect to a node representing the details of the destination account of the identified specific transaction in the data tree; and
represent source accounts and/or destination accounts of transactions that occurred after the specific transaction in the time-ordered list; and
storing, by the server, in the database, the further nodes representing the source accounts and/or the destination accounts in the sub-network, such that the sub-set of nodes of the sub-network comprises said further nodes.

12. The computer implemented method according to any preceding claim, wherein the first predetermined length of time is set between 3 minutes and 50 days.

13. The computer implemented method according to any preceding claim, the method, after inputting, at the server, into the threat detection algorithm, the updated data tree, further comprising:
detecting, at the server by the threat detection algorithm, a threat in the payment network.

14. A system to detect threats in a payment network using a threat detection algorithm by limiting the growth of a data tree, for use with a threat detection algorithm, the system configured to perform the method steps of any of claims 1 to 13.

15. A non-transitory computer-readable medium comprising instructions which, when executed by a computer, cause the computer to carry out the method steps of any claim 1 to 13.
